# EUROPEAN PATENT APPLICATION

(11) **EP 4 287 159 A1**
(43) Date of publication of application: **06.12.2023**
(21) Application number: 21921667.8
(22) Date of filing: 27.01.2021
(51) Int. Cl.: G08G 1/123

(54) **INFORMATION PROCESSING DEVICE, INFORMATION PROCESSING SYSTEM, AND INFORMATION PROCESSING METHOD**

(71) Applicant: NISSAN MOTOR CO., LTD., Kanagawa 221-0023 (JP)
(72) Inventor: NAKATA Yudai, Atsugi-shi, Kanagawa 243-0123 (JP); SATOU Shigeki, Atsugi-shi, Kanagawa 243-0123 (JP); KOJO Naoki, Atsugi-shi Kanagawa 243-0123 (JP)
(74) Representative: Osha BWB
(86) International application number: PCT/JP2021/002876
(87) International publication number: WO 2022/162794

(57) **Abstract**

An information processing device, an information processing system, and an information processing method, determine whether an object to be transported is the passenger or the cargo based on a transportation request requesting transportation of the object to be transported, calculate a driving route candidate that passes through a start point candidate for starting transportation and an end point candidate for ending transportation, extracting a driving route from among the driving route candidate based on a travel time until end of transportation of the passenger who is the object to be transported in a case of determining that the object to be transported is the passenger, and based on a movement cost of the vehicle in a case of determining that the object to be transported is the cargo, and outputting the extracted driving route.

## Description

### TECHNICAL FIELD

The present invention relates to an information processing device, an information processing system, and an information processing method.

### BACKGROUND ART

A technology related to a system for providing cargo-passenger mixed loading service is disclosed, which calculates a route of the operating vehicle based on a passenger movement request and a cargo movement request and transmits the calculated route to an on-board device of the operating vehicle (Patent Literature 1).

### CITATION LIST

### PATENT LITERATURE

Patent Literature 1: Japanese Patent Laid-Open Publication No. 2017-220090

### SUMMARY OF INVENTION

### TECHNICAL PROBLEM

The technology disclosed by Patent Literature 1 calculates the route of an operating vehicle based on which of passenger transportation and cargo transportation is prioritized by the operating vehicle itself, and based on a new movement request, the technology does not calculate a route that gives priority to either passenger transportation or cargo transportation. Therefore, there is a problem that a movement cost may increase when responding to the cargo movement request by the operating vehicle that prioritizes the passenger transportation, or there is a problem that a movement time may increase when responding to the passenger movement request by the operating vehicle that prioritizes the cargo transportation.

The present invention has been made in view of the above problems, and an object of the present invention is to provide an information processing device, an information processing system, and an information processing method capable of reducing a movement time and a movement cost across cargo-passenger mixed loading service by calculating a route that gives priority to either passenger transportation or cargo transportation based on a new movement request.

### SOLUTION TO PROBLEM

In order to solve the above-described problems, an information processing device, an information processing system, and an information processing method, according to an aspect of the present invention, determine whether an object to be transported is the passenger or the cargo based on a transportation request requesting transportation of the object to be transported, calculate a driving route candidate that passes through a start point candidate for starting transportation and an end point candidate for ending transportation, extracting a driving route from among the driving route candidate based on a travel time until end of transportation of the passenger who is the object to be transported in a case of determining that the object to be transported is the passenger, and based on a movement cost of the vehicle in a case of determining that the object to be transported is the cargo and outputting the extracted driving route.

### ADVANTAGEOUS EFFECTS OF INVENTION

According to the present invention, it is possible to reduce movement time and movement costs across cargo-passenger mixed loading service by calculating a route that gives priority to either passenger transportation or cargo transportation based on a new movement request.

### BRIEF DESCRIPTION OF DRAWINGS

[Fig. 1] Fig. 1 is a block diagram illustrating a configuration of an information processing system according to an embodiment of the present invention.
[Fig. 2] Fig. 2 is a flowchart illustrating a processing of the information processing system according to the embodiment of the present invention.
[Fig. 3] Fig. 3 is a sequence chart illustrating an operation example of the information processing system according to the embodiment of the present invention.
[Fig. 4] Fig. 4 is a flowchart illustrating a processing of the information processing system according to a modified example of the embodiment of the present invention.
[Fig. 5] Fig. 5 is a sequence chart illustrating an operation example of the information processing system according to the modified example of the embodiment of the present invention.
[Fig. 6A] Fig. 6A is a diagram illustrating a first example of a driving route extracted based on a transportation request.
[Fig. 6B] Fig. 6B is a diagram showing a second example of the driving route extracted based on the transportation request.

### DESCRIPTION OF EMBODIMENTS

Hereinafter, embodiments of the present invention will be described with reference to the drawings. In the description of the drawings, the same items are designated by the same reference numerals and duplicate description will be omitted.

### [Configuration of information processing system]

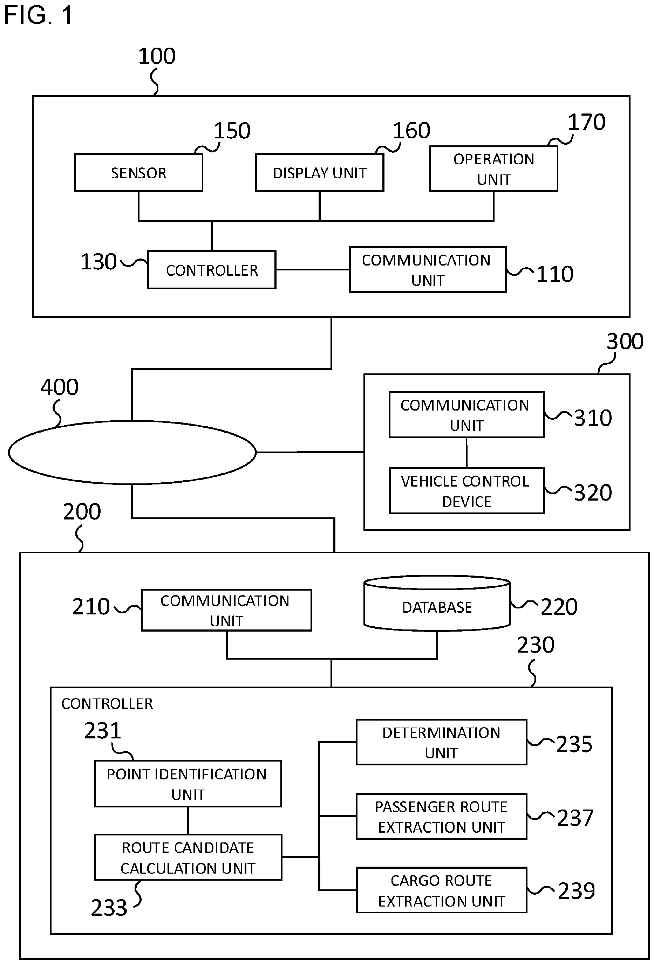

Fig. 1 is a block diagram illustrating a configuration of an information processing system according to an embodiment of the present invention. As shown in Fig. 1, the information processing system includes a terminal 100 (information terminal), a server 200, and a vehicle 300, which are connected to each other via a wireless or wired network 400. The information processing system uses one or a plurality of vehicles 300 to provide a cargo-passenger mixed loading service.

The network 400 is, for example, the Internet. The network 400 may utilize mobile communication capabilities such as 4G/LTE and 5G.

The terminal 100 receives a user's operation and transmits information regarding the received operation to the network 400. For example, a portable terminal (smartphone, tablet, etc.) used by a user daily can be used as the terminal 100.

The terminal 100 transmits to the network 400 a transportation request requesting transportation of a passenger or a cargo by vehicle based on a user's operation, or a predetermined event detected by the terminal 100. Details of the transportation request will be described later.

The vehicle 300 is a vehicle that provides means of transportation to the destination specified in the transportation request, such as an automatic driving vehicle. Other examples of the vehicle 300 include various means of transport such as manned/unmanned taxis, buses, and trucks. A plurality of vehicles may be registered in the information processing system.

For example, the vehicle 300 includes a communication unit 310 and a vehicle control device 320. The vehicle 300 may transmit a vehicle information of the vehicle 300 at a predetermined timing or at a predetermined cycle via the communication unit 310 or may transmit the vehicle information of the vehicle 300 via the communication unit 310, based on a command from the terminal 100 or the server 200. The vehicle information includes a position data indicating a position of vehicle 300. Alternatively, the vehicle control device 320 may cause the vehicle 300 to travel based on a driving route acquired via the communication unit 310.

Based on the transportation request from a user, the server 200 generates information about a vehicle to be allocated to the user and a driving route of the vehicle. The server 200 may be installed in the terminal 100 or the vehicle 300.

In the following, it is assumed that terminal 100, server 200, and vehicle 300 are capable of bi-directional communication via network 400.

### [Configuration of terminal]

Next, the terminal 100 (information terminal) will be described. As shown in Fig. 1, the terminal 100 includes a sensor 150, a display unit 160, an operation unit 170, a communication unit 110, and a controller 130.

The sensor 150 is composed of a plurality of sensor groups and includes a position detection sensor that acquires the position data indicating the position of terminal 100. For example, the position detection sensor is a sensor that measures an absolute position, such as GPS (Global Positioning System). In addition, the position detection sensor may be a sensor that measures an absolute position by a method such as Wi-Fi (registered trademark) positioning, RFID (Radio Frequency Identifier) positioning, beacon positioning, or the like.

The display unit 160 displays information regarding a waiting point where the vehicle 300 is to be met. Further, the display unit 160 may display guidance information for guiding a movement of the user to the waiting point. In addition, the display unit 160 may display information on the vehicle 300 and information on the driving route of the vehicle 300. The information displayed by the display unit 160 may be acquired from the server 200 via the network 400 by the communication unit 110 described later.

Note that the display unit 160 is not limited to presenting various types of information by visual information. The display unit 160 may present information to the user using auditory information or may present information to the user by generating vibration and stimulating the user with vibration.

The operation unit 170 receives user operations corresponding to various commands from the user to the information processing system. For example, the operation unit 170 may be an input interface with a plurality of buttons, or a touch panel with a touch interface.

More specifically, the display unit 160 may display icons represented by pictures or symbols so that the user can operate them, and the operation unit 170 may receive user operations by touching or dragging the displayed icons.

The communication unit 110 transmits and receives information to and from network 400. The communication unit 110 stores information acquired from the network 400 in a memory (not shown) or the like, and outputs to the network 400 predetermined information such as transportation requests generated based on user operations and the position data. For example, the communication unit 110 may be a device with a mobile communication function such as 4G/LTE or 5G, or a device with a Wi-Fi communication function.

The controller 130 is connected to the sensor 150, the display unit 160, the operation unit 170, and the communication unit 110. Information from the sensor 150, the operation unit 170, and the communication unit 110 is input to the controller 130. Information from the controller 130 is output to the display unit 160 and the communication unit 110.

Note that the controller 130 is a general-purpose microcomputer having a CPU (Central Processing Unit), a memory, and an input/output unit. A computer program (information terminal program) for functioning as part of the information processing system is installed in the controller 130. By executing a computer program, the controller 130 controls display unit 160 and communication unit 110.

Various information processing provided by the controller 130 may be realized by software or may be realized by dedicated hardware.

The controller 130 generates the transportation request to the information processing system based on the user's operation on the operation unit 170.

Here, the transportation request is a request requesting transportation of the passenger or the cargo by the vehicle and is a vehicle allocation request requesting allocation of the vehicle for transportation. The transportation request includes at least type data indicating whether the object to be transported is the passenger or the cargo.

The type data includes, for example, information identifying the terminal 100 that sent the transportation request, information identifying the application running on the terminal 100 that generated the transportation request, and information identifying the user operation regarding the transportation request.

For example, by referring to the information identifying the terminal 100, regarding the terminal 100 that sent the transportation request, it is possible to determine whether the terminal is for sending a transportation request for transportation of passengers or cargo. Similarly, by referring to the information identifying the application, regarding the application that sent the transportation request, it is possible to determine whether the application is for sending the transportation request for transportation of passenger or cargo. In addition, it is possible to determine whether the user desires transportation of passenger or cargo by referring to information identifying the user operation regarding the transportation request.

In addition, the transportation request may include information on a desired start point at which a user desires to start transportation of the object to be transported, and a desired start timing at which a user desires to start transportation of the object to be transported. Further, the transportation request may include information on a desired end point at which a user desires to end transportation of the object to be transported, and a desired end timing at which a user desires to end transportation of the object to be transported.

For example, if the object to be transported is the passenger, the transportation request may include information on a boarding point at which the passenger wishes to board as the desired start point, and information on a desired timing at which the passenger wishes to board at the boarding point as the desired start timing. Further, the transportation request may include information on an alighting point at which the passenger wishes to alight as the desired end point, and information on a desired timing at which the passenger wishes to alight at the alighting point as the desired end timing.

If the object to be transported is the cargo, the transportation request may include information on a loading point at which for loading the cargo onto the vehicle as the desired start point, and information on a desired timing for loading the cargo at the loading point as the desired start timing. Further, the transportation request may include information on an unloading point at which for unloading the cargo from the vehicle as the desired end point, and information on a desired timing for unloading the cargo at the unloading point as the desired end timing.

### [Configuration of server]

Next, the server 200 (information processing device) will be described. As shown in Fig. 1, the server 200 includes a communication unit 210 (acquisition unit, output unit), a database 220 and a controller 230.

The communication unit 210 transmits and receives information to and from network 400. The communication unit 210 acquires predetermined information from the network 400, such as transportation requests and the position data transmitted from the terminal 100 and vehicle information transmitted from the vehicle 300 and records the acquired information in the database 220. Alternatively, the communication unit 210 may transmit predetermined information generated by the controller 230 to the terminal 100 and the vehicle 300.

The database 220 (storage unit) stores information acquired by the communication unit 210. In particular, the database 220 stores one or more transportation requests. In addition, the database 220 stores driving route candidates and driving routes calculated based on transportation requests by the controller 230, which will be described later. At that time, the database 220 stores information on the vehicle, the driving route candidate associated with the vehicle, and the driving route.

The driving route is extracted from the driving route candidates by a passenger route extraction unit 237 and a cargo route extraction unit 239, which will be described later. If the driving route candidate is updated by a route candidate calculation unit 233, which will be described later, the driving route corresponding to the updated driving route candidate may also be updated. The updated driving route candidates and driving routes may be stored in the database 220 each time they are updated.

In addition, the database 220 may store stop points where vehicles can stop in areas where the cargo-passenger mixed loading service are provided. For example, the stop points stored in the database 220 include points at which passengers boarded the vehicle, points at which passengers alighted from the vehicle, points at which cargo was loaded onto the vehicle, and points at which cargo was unloaded from the vehicle, and the like.

In addition, the stop points stored in the database 220 may be preset points. For example, the points stored in the database 220 include taxi stands, bus stops, stores such as supermarkets and convenience store, entrances and exits of public facilities, and cargo pickup locations.

The controller 230 is a general-purpose microcomputer having a CPU (Central Processing Unit), memory, and an input/output unit. A computer program (information processing server program) for functioning as part of the information processing system is installed in the controller 230. By executing the computer program, the controller 230 functions as a plurality of information processing circuits (231, 233, 235, 237, 239).

Here, an example is shown in which the plurality of information processing circuits (231, 233, 235, 237, 239) included in the controller 230 are realized by software. However, it is also possible to configure the information processing circuits (231, 233, 235, 237, 239) by preparing dedicated hardware for executing each of the following information processing. Further, the plurality of information processing circuits (231, 233, 235, 237, 239) may be configured by individual hardware.

The controller 230 includes, as a plurality of information processing circuits (231, 233, 235, 237, 239), a point identification unit 231, a route candidate calculation unit 233 (calculation unit), a determination unit 235, a passenger route extraction unit 237 (extraction unit) and a cargo route extraction unit 239 (extraction unit).

The point identification unit 231 identifies, based on the transportation request, a start point candidate for starting transportation of the object to be transported and an end point candidate for ending transportation of the object to be transported. Note that the point identification unit 231 may identify one or more start point candidates and one or more end point candidates for each transportation request.

For example, the point identification unit 231 may identify, as the start point candidate, a stop point located near the desired start point included in the transportation request. Further, the point identification unit 231 may identify, as the end point candidate, a stop point located near the desired end point included in the transportation request. The point identification unit 231 may identify the desired start point and the desired end point included in the transportation request as the start point candidate and the end point candidate, respectively.

Further, the point identification unit 231 may identify a stop point located near the terminal 100 as the start point candidate based on the position data indicating the position of the terminal 100. Further, the point identification unit 231 may identify a stop point located near the destination as the end point candidate, based on the information of the destination of the object to be transported included in the transportation request.

Note that the point identification unit 231 identifies, as end point candidates, stop points other than the stop points identified as start point candidates. As a result, there is no stop point identified as the start point candidate and the end point candidate.

The route candidate calculation unit 233 (calculation unit) calculates a driving route candidate that passes through the start point candidate and the end point candidate, on which the vehicle that transports the object to be transported is scheduled to travel.

Specifically, the route candidate calculation unit 233 calculates the driving route candidate that passes through the end point candidate after passing through the start point candidate for one or more vehicles 300 that are managed by the information processing system.

To reduce the calculation load when calculating the driving route candidate by the route candidate calculation unit 233, the route candidate calculation unit 233 may extract one or more vehicles 300 located within a predetermined range from the start point candidate and may calculate the driving route candidate for the extracted vehicle.

It should be noted that the driving route candidate calculated by the route candidate calculation unit 233 is associated with one or more transportation requests among the transportation requests received by the information processing system. For example, when calculating a driving route candidate for a certain vehicle among the one or more vehicles 300, if the driving route candidate traveled by the vehicle has not yet been calculated, the route candidate calculation unit 233 newly calculates the driving route candidate passing through the start point candidate and the end point candidate identified based on a newly received transportation request.

On the other hand, if the driving route candidate traveled by the vehicle has already been calculated based on past transportation requests (however, transportation requests for which transportation has not yet been completed), the route candidate calculation unit 233 modifies the already calculated driving route candidate and calculates a driving route candidate passing through the start point candidate and end point candidate identified based on the newly received transportation request. The modified driving route candidate becomes to pass through both the start point candidate and end point candidate identified based on the past transportation request and the start point candidate and end point candidate identified based on the newly received transportation request.

If a plurality of transportation requests is associated with the driving route candidate, a vehicle that travels on the driving route candidate performs a plurality of transportations related to the plurality of transportation requests associated with the driving route candidate.

The driving route candidates calculated by the route candidate calculation unit 233 are stored in the database 220.

In addition, the route candidate calculation unit 233 calculates a travel time until end of transportation of the passenger who is the object to be transported, and a movement cost of the vehicle, for the calculated driving route candidate.

For example, the route candidate calculation unit 233 may extract a transportation request related to passenger transportation among the transportation request associated with the driving route candidate as a passenger transportation request. Further, the route candidate calculation unit 233 may extract a latest passenger transportation request among the passenger transportation request as a new passenger transportation request.

Further, the route candidate calculation unit 233 may calculate, as the travel time for each driving route candidate, a time from a timing when the new passenger transportation request is acquired to a scheduled timing when transportation related to the new passenger transportation request is completed, based on the driving route candidate. That is, the route candidate calculation unit 233 may calculate the travel time considering the time related to the new passenger transportation request, while calculating the travel time without considering the time related to the passenger transportation request other than the new passenger transportation request.

Furthermore, the route candidate calculation unit 233 may calculate, as the travel time for each driving route candidate, a value obtained by summing a calculated time over the passenger transportation request, wherein the calculated time is calculated based on the driving route candidate and is a time from a timing when the passenger transportation request is confirmed or a timing when the passenger transportation request is acquired to a scheduled timing when transportation related to the passenger transportation request is completed. That is, the route candidate calculation unit 233 may calculate the travel time considering the time related to the new passenger transportation request, while calculating the travel time with considering the time related to the passenger transportation request other than the new passenger transportation request.

Further, the route candidate calculation unit 233 may calculate, as the movement cost for each driving route candidate, a scheduled driving distance or a scheduled driving time during the vehicle travels along the driving route candidate, based on the driving route candidate. That is, the route candidate calculation unit 233 may calculate the movement cost considering the scheduled driving distance or the scheduled driving time of the vehicle traveling on the driving route candidate to be calculated, while calculating the movement cost without considering the scheduled driving distance or the scheduled driving time of the vehicle other than the vehicle traveling on the driving route candidate to be calculated.

Further, the route candidate calculation unit 233 may calculate, as the movement cost for each driving route candidate, a value obtained by summing a scheduled driving distance or a scheduled driving time of the vehicle over entire vehicles, which are calculated based on the driving route candidate. That is, the route candidate calculation unit 233 may calculate the movement cost considering the scheduled driving distance or the scheduled driving time of the vehicle on the driving route candidate to be calculated, the vehicle traveling from the current position to the final destination (last alighting place or delivery place) on the driving route candidate, while calculating the movement cost with considering the scheduled driving distance or the scheduled driving time of the vehicle other than the vehicle traveling on the driving route candidate to be calculated.

In addition, the route candidate calculation unit 233 may calculate only driving route candidates that satisfy a constraint condition determined based on the transportation request. Further, the route candidate calculation unit 233 may exclude driving route candidates that do not satisfy the constraint condition determined based on the transportation request. For example, the route candidate calculation unit 233 may calculate only the driving route candidates for which the difference between a scheduled timing when the vehicle arrives at the end point candidate and the desired end timing included in the transportation request is equal to or less than a predetermined threshold. Further, the route candidate calculation unit 233 may calculate only the driving route candidates for which the difference between a scheduled timing when the vehicle arrives at the start point candidate and the desired start timing included in the transportation request is equal to or less than a predetermined threshold.

In this way, by calculating only the driving route candidates that satisfy the constraint condition determined based on the transportation request, it is possible to reduce the number of driving route candidates stored in the database 220 and reduce the usage of storage resources. Furthermore, the calculation load in calculating the travel time and the movement cost in the route candidate calculation unit 233 can be reduced. Furthermore, it is guaranteed that the driving route that satisfies the constraint condition determined based on the transportation request will be reliably extracted, leading to improved convenience for the user.

Here, the predetermined threshold when the object to be transported is the cargo may be set larger than the predetermined threshold when the object to be transported is the passenger. As a result, it is possible to calculate the driving route candidate that preferentially comply with the desired start timing and desired end timing in the transportation request for which the object to be transported is the passenger, compared to the desired start timing and the desired end timing for the transportation request where the object to be transported is cargo.

Based on the type data included in the transportation request, the determination unit 235 determines whether the object to be transported is the passenger or the cargo.

For example, the determination unit 235 refers information identifying the terminal 100 in the type data and determines whether the terminal 100 that sent the transportation request is a terminal for transmitting a transportation request for transportation of the passenger or the cargo. Then, if the terminal 100 is the terminal that transmits the transportation request for transportation of the passenger, the determination unit 235 determines that the object to be transported is the passenger. If the terminal 100 is the terminal that transmits the transportation request for transportation of the cargo, the determination unit 235 determines that the object to be transported is the cargo.

The determination unit 235 refers information identifying an application in the type data and determines whether the application that generated the transportation request is an application for transmitting a transportation request for transportation of the passenger or the cargo. Then, if the application is an application that transmits the transportation request for transportation of the passenger, the determination unit 235 determines that the object to be transported is the passenger. If the application is an application that transmits the transportation request for transportation of the cargo, the determination unit 235 determines that the object to be transported is the cargo.

The determination unit 235 refers information identifying a user operation related to the transportation request and determines whether the object to be transported is the passenger or the cargo. For example, if the transportation request includes information about the number of passengers specified by the user operation, the determination unit 235 determines that the object to be transported is the passenger. If the transportation request includes information such as the number of cargoes to be transported by the vehicle and the amount of cargo specified by the user operation, the determination unit 235 determines that the object to be transported is cargo.

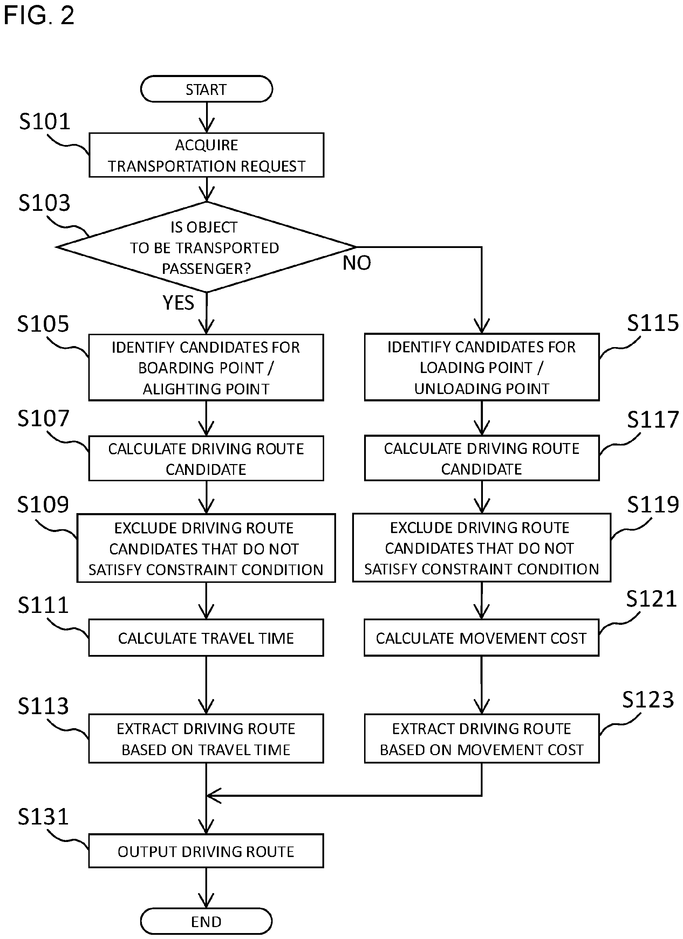

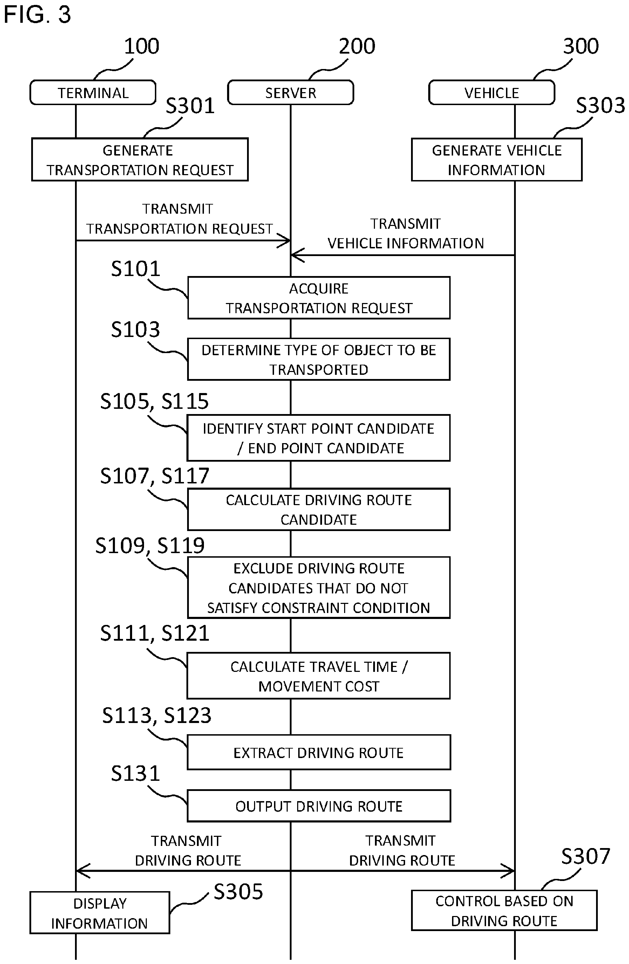

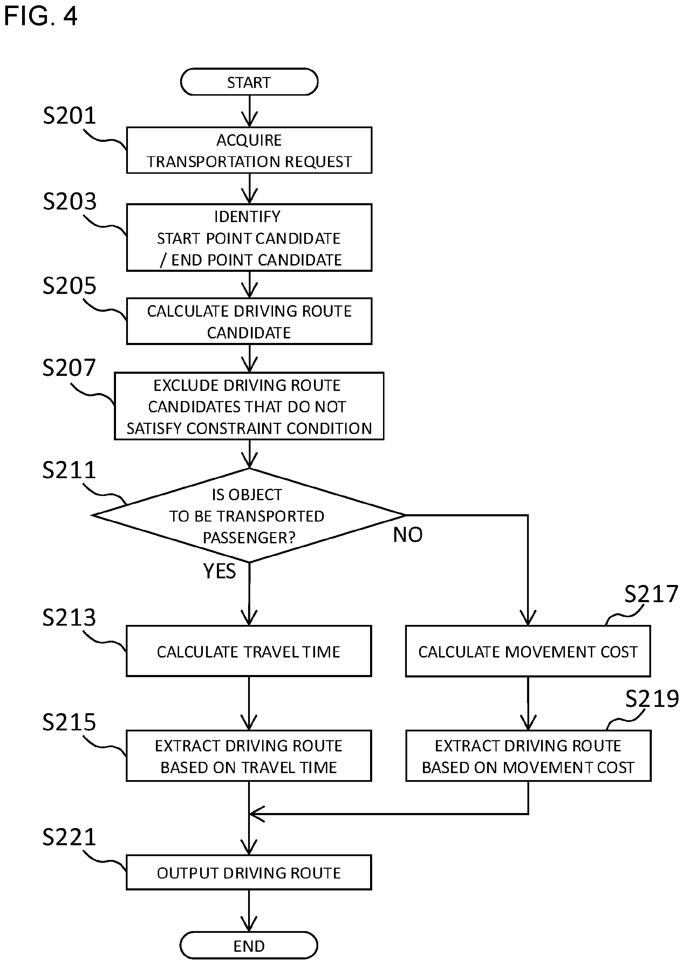

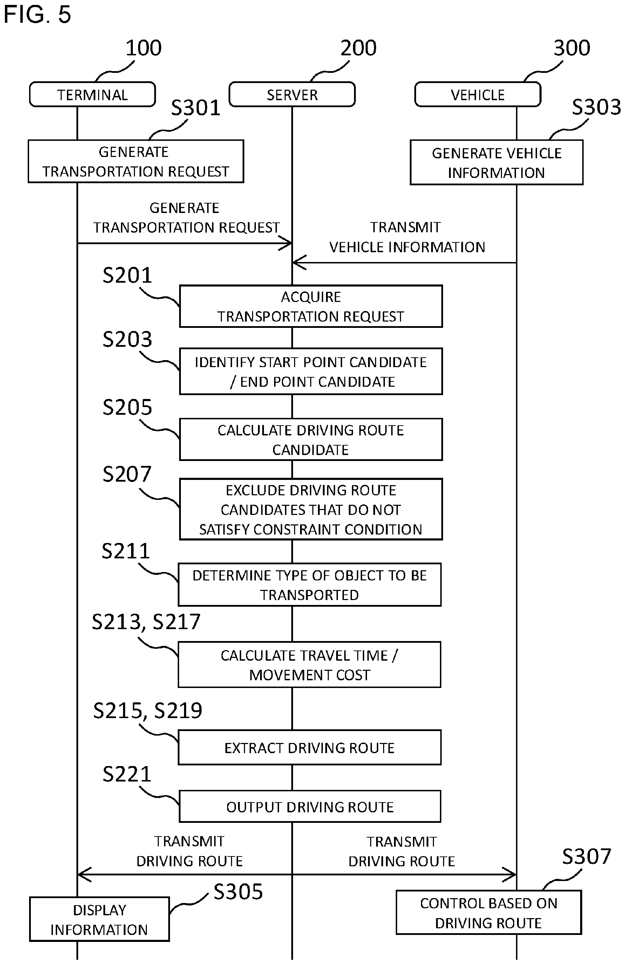

Note that the determination processing by the determination unit 235 may be executed before or after the processing by the point identification unit 231 and the route candidate calculation unit 233. For example, as shown in Figs. 2 and 3, the determination processing by the determination unit 235 may be performed before the processing by the point identification unit 231 and the route candidate calculation unit 233. As shown in Figs. 4 and 5, the determination processing by the determination unit 235 may be performed after the processing by the point identification unit 231 and the route candidate calculation unit 233.

If the determination unit 235 determines that the object to be transported is the passenger, the passenger route extraction unit 237 (extraction unit) extracts a driving route from among the driving route candidate based on a travel time until end of transportation of the passenger who is the object to be transported. Note that the passenger route extraction unit 237 may preferentially extract a driving route candidate with a shorter travel time as the driving route, than a driving route candidate with a longer travel time from the driving route candidate.

Further, the passenger route extraction unit 237 may extract the driving route candidate in which a maximum number of passengers of the vehicle when the vehicle travels on the driving route candidate is equal to or less than a predetermined number of passengers, based on the transportation request, and may extract the driving route from the extracted driving route candidate based on the travel time. Here, the predetermined number of passengers is, for example, the maximum capacity (capacity) determined for each vehicle. The passenger route extraction unit 237 may refer the transportation request associated with the driving route candidate and may calculate the maximum number of passengers in the vehicle traveling on the driving route candidate based on the information on the number of people included in the request.

If the determination unit 235 determines that the object to be transported is the cargo, the cargo route extraction unit 239 (extraction unit) extracts a driving route from among the driving route candidate based on a movement cost of the vehicle. Note that the cargo route extraction unit 239 may preferentially extract a driving route candidate with a lower movement cost as the driving route, than a driving route candidate with a higher movement cost from the driving route candidate.

Further, the cargo route extraction unit 239 may extract the driving route candidate in which a load of the vehicle when the vehicle travels on the driving route candidate is equal to or less than a predetermined amount, based on the transportation request, and may extract the driving route from the extracted driving route candidate based on the movement cost. Here, the predetermined amount is, for example, the maximum load amount determined for each vehicle. The cargo route extraction unit 239 may refer the transportation request associated with the driving route candidate and may calculate the maximum load capacity of the vehicle traveling on the driving route candidate based on the information on the number of loaded cargoes and the load amount included in the request.

Furthermore, the above-described passenger route extraction unit 237 and cargo route extraction unit 239 may extract the driving route from the driving route candidate for which a difference between a scheduled timing when the vehicle arrives at the end point candidate and the desired end timing included in the transportation request is equal to or less than a predetermined threshold. As a result, it is guaranteed that the driving route that satisfies the constraint condition determined based on the transportation request will be reliably extracted, leading to improved convenience for the user.

Furthermore, the passenger route extraction unit 237 and the cargo route extraction unit 239 may extract the driving route from the driving route candidate for which a difference between a scheduled timing when the vehicle arrives at the start point candidate and the desired start timing included in the transportation request is equal to or less than a predetermined threshold. As a result, it is guaranteed that the driving route that satisfies the constraint condition determined based on the transportation request will be reliably extracted, leading to improved convenience for the user.

The predetermined threshold when the object to be transported is the cargo may be set larger than the predetermined threshold when the object to be transported is the passenger. As a result, it is possible to extract the driving route that preferentially comply with the desired start timing and desired end timing in the transportation request for which the object to be transported is the passenger, compared to the desired start timing and the desired end timing for the transportation request where the object to be transported is cargo.

The driving route extracted by the passenger route extraction unit 237 or the cargo route extraction unit 239 is output via the communication unit 210. For example, the extracted driving route may be output to the terminal 100 and then presented to the user. After the extracted driving route is output to the vehicle 300, the vehicle 300 may be controlled according to the driving route.

### [Processing procedure of information processing system]

Next, the processing procedure of the information processing system according to the present embodiment will be described with reference to Figs. 2 and 3. Fig. 2 is a flowchart illustrating a processing of the information processing system according to the embodiment of the present invention. Fig. 3 is a sequence chart illustrating an operation example of the information processing system according to the embodiment of the present invention.

The flowchart shown in Fig. 2 is started at the start of operation of the information processing system that provides the cargo-passenger mixed loading service and is repeatedly executed while the information processing system is in operation.

As shown in Fig. 3, in step S301, the terminal 100 generates the transportation request and the transportation request is transmitted from the terminal 100 to the server 200. Then, in step S101, the communication unit 210 acquires the transportation request from the terminal 100.

In step S303, the vehicle information is generated in the vehicle 300 and transmitted from the vehicle 300 to the server 200. Then, communication unit 210 acquires the vehicle information from the vehicle 300.

In step S103, the determination unit 235 determines the type of the object to be transported based on the type data included in the transportation request. That is, the determination unit 235 determines whether the object to be transported is the passenger or the cargo.

If it is determined that the object to be transported is the passenger (YES in step S103), steps S105, S107, S109, S111 and S113 are executed. On the other hand, if it is determined that the object to be transported is the cargo (NO in step S103), steps S115, S117, S119, S121, and S123 are executed.

If it is determined that the object to be transported is the passenger (YES in step S103), in step S105, the point identification unit 231 identifies candidates for boarding point / alighting point (the start point candidate for starting transportation of the object to be transported, and the end point candidate for ending transportation of the object to be transported) based on the transportation request.

In step S107, the route candidate calculation unit 233 calculates the driving route candidate that passes through the start point candidate and the end point candidate, on which the vehicle that transports the object to be transported is scheduled to travel.

In step S109, the route candidate calculation unit 233 excludes driving route candidates that do not satisfy the constraint condition determined based on the transportation request.

In step S111, the route candidate calculation unit 233 calculates the travel time of the driving route candidate.

In step S113, the passenger route extraction unit 237 extracts the driving route from the driving route candidate based on the travel time.

If it is determined that the object to be transported is the cargo (NO in step S103), in step S115, the point identification unit 231 identifies candidates for loading point / unloading point (the start point candidate for starting transportation of the object to be transported, and the end point candidate for ending transportation of the object to be transported) based on the transportation request.

In step S117, the route candidate calculation unit 233 calculates the driving route candidate that passes through the start point candidate and the end point candidate, on which the vehicle that transports the object to be transported is scheduled to travel.

In step S119, the route candidate calculation unit 233 excludes driving route candidates that do not satisfy the constraint condition determined based on the transportation request.

In step S121, the route candidate calculation unit 233 calculates the movement cost of the driving route candidate.

In step S123, the passenger route extraction unit 237 extracts the driving route from the driving route candidate based on the movement cost.

In step S131, the extracted driving route is output via the communication unit 210.

The output driving route may be transmitted from the server 200 to the terminal 100 and presented to the user via the display unit 160 of the terminal 100 in step S305. Further, the output driving route may be transmitted from the server 200 to the vehicle 300, and control based on the driving route may be performed in the vehicle 300 in step S307.

In addition, although not shown in Fig. 3, the user may determine whether to approve transportation based on the presented driving route, and the result of approval or disapproval may be transmitted from the terminal 100 to the vehicle 300. Then, in a case that transportation is approved, the approved driving route may be transmitted from the server 200 to the vehicle 300.

### [Processing procedure of information processing system (modified example)]

Next, the processing procedure of the information processing system according to the modified example of the present embodiment will be described with reference to Figs. 4 and 5. Fig. 4 is a flowchart illustrating a processing of the information processing system according to the modified example of the embodiment of the present invention. Fig. 5 is a sequence chart illustrating an operation example of the information processing system according to the modified example of the embodiment of the present invention.

The flowchart shown in Fig. 4 is started at the start of operation of the information processing system that provides the cargo-passenger mixed loading service and is repeatedly executed while the information processing system is in operation.

As shown in Fig. 5, in step S301, the terminal 100 generates the transportation request and the transportation request is transmitted from the terminal 100 to the server 200. Then, in step S201, the communication unit 210 acquires the transportation request from the terminal 100.

In step S303, the vehicle information is generated in the vehicle 300 and transmitted from the vehicle 300 to the server 200. Then, communication unit 210 acquires the vehicle information from the vehicle 300.

In step S203, the point identification unit 231 identifies the start point candidate for starting transportation of the object to be transported and the end point candidate for ending transportation of the object to be transported, based on the transportation request.

In step S205, the route candidate calculation unit 233 calculates the driving route candidate that passes through the start point candidate and the end point candidate, on which the vehicle that transports the object to be transported is scheduled to travel.

In step S207, the route candidate calculation unit 233 excludes driving route candidates that do not satisfy the constraint condition determined based on the transportation request.

In step S211, the determination unit 235 determines the type of the obj ect to be transported based on the type data included in the transportation request. That is, the determination unit 235 determines whether the object to be transported is the passenger or the cargo.

If it is determined that the object to be transported is the passenger (YES in step S211), the route candidate calculation unit 233 calculates the travel time of the driving route candidate in step S213. Then, in step S215, the passenger route extraction unit 237 extracts the driving route from the driving route candidate based on the travel time.

On the other hand, if it is determined that the object to be transported is the cargo (NO in step S211), the route candidate calculation unit 233 calculates the movement cost of the driving route candidate in step S217. Then, in step S219, the passenger route extraction unit 237 extracts the driving route from the driving route candidate based on the movement cost.

In step S221, the extracted driving route is output via the communication unit 210.

The output driving route may be transmitted from the server 200 to the terminal 100 and presented to the user via the display unit 160 of the terminal 100 in step S305. Further, the output driving route may be transmitted from the server 200 to the vehicle 300, and control based on the driving route may be performed in the vehicle 300 in step S307.

In addition, although not shown in Fig. 5, the user may determine whether to approve transportation based on the presented driving route, and the result of approval or disapproval may be transmitted from the terminal 100 to the vehicle 300. Then, in a case that transportation is approved, the approved driving route may be transmitted from the server 200 to the vehicle 300.

### [Effects of the embodiments]

As explained in detail above, an information processing device, an information processing system, and an information processing method, according to the present embodiment, determine whether an object to be transported is the passenger or the cargo based on a transportation request requesting transportation of the object to be transported, calculate a driving route candidate that passes through a start point candidate for starting transportation and an end point candidate for ending transportation, extracting a driving route from among the driving route candidate based on a travel time until the end of transportation of the passenger who is the object to be transported in a case of determining that the object to be transported is the passenger, and based on a movement cost of the vehicle in a case of determining that the object to be transported is the cargo, and outputting the extracted driving route.

As a result, it is possible to reduce movement time and movement costs across cargo-passenger mixed loading service by calculating a route that gives priority to either passenger transportation or cargo transportation based on a new transportation request (movement request).

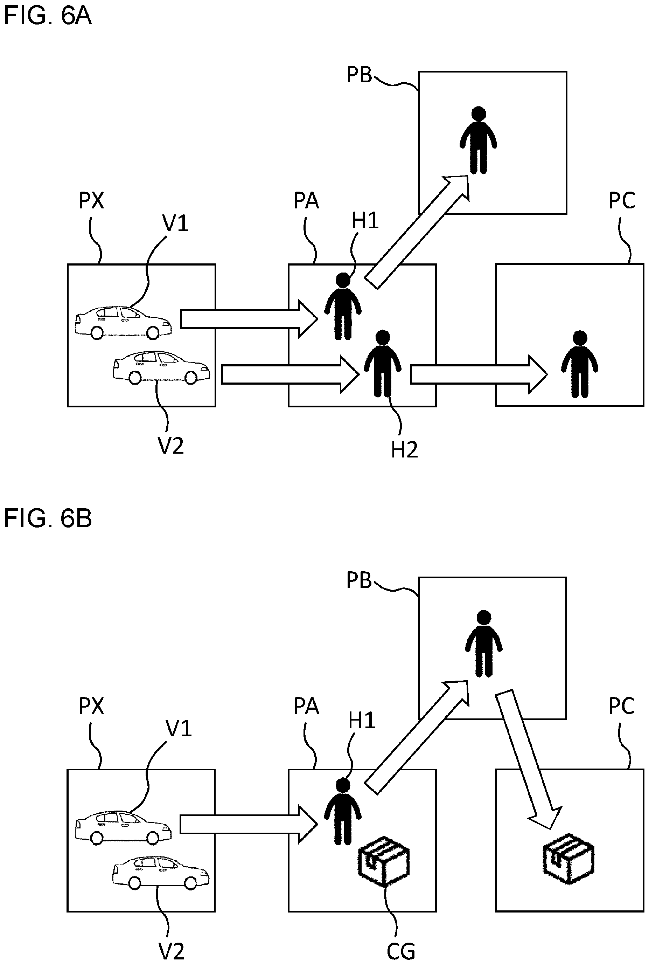

Reducing movement time and movement costs across cargo-passenger mixed loading service will be described with reference to Figs. 6A and 6B. Fig. 6Ais a diagram illustrating a first example of a driving route extracted based on a transportation request. Fig. 6B is a diagram showing a second example of the driving route extracted based on the transportation request.

In both Figs. 6A and 6B, it is assumed that the first transportation request requests transportation of the passenger H1 which is the object to be transported from the point PA to the point PB. It is assumed that the driving route is extracted in response to the first transportation request, wherein the vehicle V1 leaves the waiting point PX, goes through the points PA and PB in this order, and returns to the waiting point PX in the driving route.

In Fig. 6A, it is assumed that following the first transportation request, transportation of the passenger H2 which is the object to be transported from point PA to point PC is requested by a second transportation request. In Fig. 6B, it is assumed that following the first transportation request, transportation of the cargo CG which is the object to be transported from point PA to point PC is requested by a second transportation request.

In this case, a first driving route candidate and a second driving route candidate are conceivable as driving route candidates corresponding to the second transportation request. Here, the first driving route candidate is a route in which the vehicle V1 departs from the waiting point PX, passes through the points PA, PB, and PC in this order, and returns to the waiting point PX. The second driving route candidate is a route on which the vehicle V2 departs from the waiting point PX, passes through the points PA and PC in this order, and returns to the waiting point PX.

In a case of following the first driving route candidate, only the vehicle V1 travels without the vehicle V2 traveling, and in a case of following the second driving route candidate, both the vehicle V1 and the vehicle V2 travel. Therefore, the total movement cost of both the vehicle V1 and the vehicle V2 is smaller for the first driving route candidate than for the second driving route candidate.

On the other hand, in a case of following the first driving route candidate, the passenger H2 departs from the point PA, passes through the point PB, and then goes to the point PC. In a case of following the second driving route candidate, the passenger H2 leaves the point PA and then goes directly to the point PC. Therefore, the travel time for the first driving route candidate is longer than the travel time for the second driving route candidate.

According to the information processing device, the information processing system, and the information processing method according to the present embodiment, in a case of determining that the object to be transported is the passenger, the driving route is extracted from the driving route candidate based on the travel time until end of transportation of the passenger who is the object to be transported. Therefore, as shown in Fig. 6A, when the object to be transported according to the second transportation request is the passenger, the second driving route candidate is extracted as the driving route. Therefore, it is possible to output a vehicle and a driving route along which the vehicle travels, which shortens the travel time of the passenger, in response to the transportation request for which the passenger is the object to be transported.

On the other hand, according to the information processing device, the information processing system, and the information processing method according to the present embodiment, in a case of determining that the object to be transported is the cargo, the driving route is extracted from the driving route candidate based on the movement cost of the vehicle. Therefore, as shown in Fig. 6B, when the object to be transported related to the second transportation request is the cargo, the first driving route candidate is extracted as the driving route. Therefore, it is possible to output a vehicle and a driving route along which the vehicles travel, which reduces the movement cost of the vehicle V 1 and the vehicle V2 travel, in response to the transportation request for which the cargo is the object to be transported.

As described above, it is possible to shorten the travel time for passengers who use the cargo-passenger mixed loading service, so that the passengers can move in a shorter time and the convenience of the passengers can be improved. On the other hand, in a case of carrying the cargo, it is not necessary to move in a short period of time, and instead the movement cost of the vehicle can be reduced. As a result, it is possible for the servicer who provides the cargo-passenger mixed loading service to reduce expenses such as vehicle fuel consumption and maintenance costs.

In addition, the vehicles allocated in the cargo-passenger mixed loading service can run efficiently, reducing traffic congestion, and reducing the environmental load.

Further, the information processing device, the information processing system, and the information processing method according to the present embodiment, may preferentially extract a driving route candidate with a shorter travel time as the driving route, than a driving route candidate with a longer travel time from the driving route candidate, in a case of determining that the object to be transported is the passenger. As a result, it is possible to shorten the travel time for passengers using the cargo-passenger mixed loading service, so that the passengers can travel in a shorter period of time and the convenience of the passengers can be improved.

Furthermore, the information processing device, the information processing system, and the information processing method according to the present embodiment, may preferentially extract a driving route candidate with a lower movement cost as the driving route, than a driving route candidate with a higher movement cost from the driving route candidate, in a case of determining that the object to be transported is the cargo. As a result, it is possible to further reduce the movement cost of the vehicle when transporting cargo in the cargo-passenger mixed loading service. Therefore, it is possible for the servicer who provides the cargo-passenger mixed loading service to reduce expenses such as vehicle fuel consumption and maintenance costs. In other words, the servicer's convenience can be improved.

Further, the information processing device, the information processing system, and the information processing method according to the present embodiment, may set a transportation request related to passenger transportation among the transportation request associated with the driving route candidate as a passenger transportation request, may set a latest passenger transportation request among the passenger transportation request as a new passenger transportation request, and may calculate, as the travel time for each driving route candidate, a time from a timing when the new passenger transportation request is acquired to a scheduled timing when transportation related to the new passenger transportation request is completed, based on the driving route candidate.

Thereby, the travel time can be calculated without considering the time related to the passenger transportation request other than the new passenger transportation request, and the calculation load can be reduced. In particular, it is possible to extract the driving route that can approximately minimize the travel time for passengers, and to reduce the computational load without impairing convenience for passengers.

Furthermore, the information processing device, the information processing system, and the information processing method according to the present embodiment, may set a transportation request related to passenger transportation among the transportation request associated with the driving route candidate as a passenger transportation request, and may calculate, as the travel time for each driving route candidate, a value obtained by summing a calculated time over the passenger transportation request, wherein the calculated time is calculated based on the driving route candidate and is a time from a timing when the passenger transportation request is confirmed or a timing when the passenger transportation request is acquired to a scheduled timing when transportation related to the passenger transportation request is completed.

As a result, it is possible to shorten the travel time for passengers using the cargo-passenger mixed loading service, so that the passengers can travel in a shorter period of time and the convenience of the passengers can be improved. In particular, it is possible to extract the driving route that can minimize travel time for passengers.

Further, the information processing device, the information processing system, and the information processing method according to the present embodiment, may calculate, as the movement cost for each driving route candidate, a scheduled driving distance or a scheduled driving time during the vehicle travels along the driving route candidate, based on the driving route candidate.

As a result, the movement cost can be calculated without considering the scheduled driving distance or the scheduled driving time of the vehicle other than the vehicle traveling on the driving route candidate to be calculated, and the calculation load can be reduced. In particular, it is possible to extract a driving route that can approximately minimize the movement cost of the vehicle, and to reduce the computational load without impairing the servicer's convenience.

Furthermore, the information processing device, the information processing system, and the information processing method according to the present embodiment, may calculate, as the movement cost for each driving route candidate, a value obtained by summing a scheduled driving distance or a scheduled driving time of the vehicle over entire vehicles, which are calculated based on the driving route candidate.

As a result, it is possible to further reduce the movement cost of the vehicle when transporting cargo in the cargo-passenger mixed loading service. As a result, it is possible for the servicer who provides the cargo-passenger mixed loading service to reduce expenses such as vehicle fuel consumption and maintenance costs. In particular, it is possible to extract the driving route that can minimize the movement cost of the vehicle.

Further, the information processing device, the information processing system, and the information processing method according to the present embodiment, may extract one or more of the vehicles located within a predetermined range from the start point candidate, may calculate the driving route candidate along which the extracted vehicle travels, and may extract the driving route from the driving route candidate for any of the extracted vehicles. As a result, the number of driving route candidates to be searched can be reduced, and as a result, the calculation load required to extract driving routes can be reduced.

Furthermore, in a case that the transportation request includes a desired end timing at which a user desires to end transportation of the object to be transported, the information processing device, the information processing system, and the information processing method according to the present embodiment, may extract the driving route from the driving route candidate for which a difference between a scheduled timing when the vehicle arrives at the end point candidate and the desired end timing is equal to or less than a predetermined threshold.

This reduces the computational load when calculating the travel time and the movement cost. Furthermore, it is guaranteed that the driving route that satisfies the constraint condition determined based on the transportation request will be reliably extracted, leading to improved convenience for the user.

Further, in a case that the transportation request includes a desired start timing at which a user desires to start transportation of the obj ect to be transported, the information processing device, the information processing system, and the information processing method according to the present embodiment, may extract the driving route from the driving route candidate for which a difference between a scheduled timing when the vehicle arrives at the start point candidate and the desired start timing is equal to or less than a predetermined threshold.

This reduces the computational load when calculating the travel time and the movement cost. Furthermore, it is guaranteed that the driving route that satisfies the constraint condition determined based on the transportation request will be reliably extracted, leading to improved convenience for the user.

Furthermore, in the information processing device, the information processing system, and the information processing method according to the present embodiment, the predetermined threshold when the object to be transported is the cargo may be set larger than the predetermined threshold when the object to be transported is the passenger. As a result, it is possible to calculate the driving route candidate that preferentially comply with the desired start timing and desired end timing in the transportation request for which the object to be transported is the passenger, compared to the desired start timing and the desired end timing for the transportation request where the object to be transported is cargo.

Further, in the information processing device, the information processing system, and the information processing method according to the present embodiment, the type data may include at least one of information identifying an information terminal that sent the transportation request, information identifying an application that generated the transportation request, and information identifying a user operation related to the transportation request. As a result, it is possible to more accurately determine whether the object to be transported related to the transportation request is the passenger or the cargo.

Furthermore, the information processing device, the information processing system, and the information processing method according to the present embodiment, may update the driving route stored in a storage unit each time the driving route is extracted, wherein the storage unit associates and stores the vehicle and the extracted driving route. As a result, the driving route of the vehicle under the management of the cargo-passenger mixed loading service is dynamically updated based on the received transportation request, and the vehicles for transportation can be allocated more quickly based on the transportation request.

Further, after determining that the object to be transported is the passenger, the information processing device, the information processing system, and the information processing method according to the present embodiment, may identify the start point candidate and the end point candidate based on the transportation request, and may calculate the driving route candidate passing through the end point candidate after passing through the start point candidate. Then, the information processing device, the information processing system, and the information processing method may extract the driving route candidate in which a maximum number of passengers of the vehicle when the vehicle travels on the driving route candidate is equal to or less than a predetermined number of passengers, based on the transportation request, and may extract the driving route from the extracted driving route candidate based on the travel time.

As a result, even if boarding together or the like occurs, a situation in which more passengers than the capacity of the vehicle board the vehicle is suppressed. As a result, it is possible to improve the convenience of passengers who board the vehicle. In addition, passengers can be reliably transported by the allocated vehicles.

Furthermore, after determining that the object to be transported is the cargo, the information processing device, the information processing system, and the information processing method according to the present embodiment, may identify the start point candidate and the end point candidate based on the transportation request, and may calculate the driving route candidate passing through the end point candidate after passing through the start point candidate. Then, the information processing device, the information processing system, and the information processing method may extract the driving route candidate in which a maximum load of the vehicle when the vehicle travels on the driving route candidate is equal to or less than a predetermined amount, based on the transportation request, and may extract the driving route from the extracted driving route candidate based on the movement cost.

As a result, even if cargoes are loaded based on a plurality of requests, the situation in which cargoes exceeding the maximum load capacity of the vehicle are loaded onto the vehicle is suppressed. As a result, it is possible to improve the convenience for the user who requests that the cargo be loaded onto the vehicle. In addition, cargoes can be reliably transported by the allocated vehicle.

Further, after calculating the driving route candidate, the information processing device, the information processing system, and the information processing method according to the present embodiment, may determine whether the object to be transported is the passenger or the cargo. Then, in a case of determining that the object to be transported is the passenger, the information processing device, the information processing system, and the information processing method may extract the driving route candidate in which a maximum number of passengers of the vehicle when the vehicle travels on the driving route candidate is equal to or less than a predetermined number of passengers, based on the transportation request, and may extract the driving route from the extracted driving route candidate based on the travel time. Then, in a case of determining that the object to be transported is the cargo, the information processing device, the information processing system, and the information processing method may extract the driving route candidate in which a maximum load of the vehicle when the vehicle travels on the driving route candidate is equal to or less than a predetermined amount, based on the transportation request, and may extract the driving route from the extracted driving route candidate based on the movement cost.

As a result, even if boarding together or the like occurs, a situation in which more passengers than the capacity of the vehicle board the vehicle is suppressed. As a result, it is possible to improve the convenience of passengers who board the vehicle. In addition, even if cargoes are loaded based on a plurality of requests, the situation in which cargoes exceeding the maximum load capacity of the vehicle are loaded onto the vehicle is suppressed. As a result, it is possible to improve the convenience for the user who requests that the cargo be loaded onto the vehicle. Therefore, passengers and cargoes can be reliably transported by the allocated vehicles.

Respective functions described in the above embodiment may be implemented by one or plural processing circuits. The processing circuits include programmed processors, electrical circuits, etc., as well as devices such as application specific integrated circuits (ASIC) and circuit components arranged to perform the described functions, etc.

Although the contents of the present invention have been described above with reference to the embodiment, the present invention is not limited to these descriptions, and it will be apparent to those skilled in the art that various modifications and improvements can be made. It should not be construed that the present invention is limited to the descriptions and the drawings that constitute a part of the present disclosure. Based on the present disclosure, various alternative embodiments, practical examples, and operating techniques will be apparent to those skilled in the art.

It is needless to mention that the present invention also includes various embodiments that are not described herein. Therefore, the technical scope of the present invention is to be defined only by the invention specifying matters according to the scope of claims appropriately obtained from the above descriptions.

### REFERENCE SIGNS LIST

- 100: terminal (information terminal)
- 110: communication unit
- 130: controller
- 150: sensor
- 160: display unit
- 170: operation unit
- 200: server
- 210: communication unit (acquisition unit, output unit)
- 220: database (storage unit)
- 230: controller
- 231: point identification unit
- 233: route candidate calculation unit
- 235: determination unit
- 237: passenger route extraction unit
- 239: cargo route extraction unit
- 300: vehicle
- 310: communication unit
- 320: vehicle control device
- 400: network

## Claims

1. An information processing device comprising:
an acquisition unit configured to acquire a transportation request requesting transportation of an object to be transported, including type data indicating whether the object to be transported is a passenger or a cargo,
a determination unit configured to determine whether the object to be transported is the passenger or the cargo based on the type data,
a point identification unit configured to identify, based on the transportation request, a start point candidate for starting transportation of the object to be transported and an end point candidate for ending transportation of the object to be transported,
a calculation unit configured to calculate a driving route candidate that passes through the end point candidate after passing through the start point candidate, on which a vehicle that transports the object to be transported is scheduled to travel,
an extraction unit configured to extract a driving route from among the driving route candidate
based on a travel time until end of transportation of the passenger who is the object to be transported in a case of determining that the object to be transported is the passenger, and
based on a movement cost of the vehicle in a case of determining that the object to be transported is the cargo,
an output unit configured to output the extracted driving route.

2. The information processing device according to claim 1, wherein
the extraction unit is configured to preferentially extract a driving route candidate with a shorter travel time as the driving route, than a driving route candidate with a longer travel time from the driving route candidate, in a case of determining that the object to be transported is the passenger.

3. The information processing device according to claim 1 or 2, wherein
the extraction unit is configured to preferentially extract a driving route candidate with a lower movement cost as the driving route, than a driving route candidate with a higher movement cost from the driving route candidate, in a case of determining that the object to be transported is the cargo.

4. The information processing device according to any one of claims 1 to 3, wherein
the calculation unit is configured to
set a transportation request related to passenger transportation among the transportation request associated with the driving route candidate as a passenger transportation request,
set a latest passenger transportation request among the passenger transportation request as a new passenger transportation request, and
calculate, as the travel time for each driving route candidate, a time from a timing when the new passenger transportation request is acquired to a scheduled timing when transportation related to the new passenger transportation request is completed, based on the driving route candidate.

5. The information processing device according to any one of claims 1 to 3, wherein
the calculation unit is configured to
set a transportation request related to passenger transportation among the transportation request associated with the driving route candidate as a passenger transportation request, and
calculate, as the travel time for each driving route candidate, a value obtained by summing a calculated time over the passenger transportation request, wherein the calculated time is calculated based on the driving route candidate and is a time from a timing when the passenger transportation request is confirmed or a timing when the passenger transportation request is acquired to a scheduled timing when transportation related to the passenger transportation request is completed.

6. The information processing device according to any one of claims 1 to 5, wherein
the calculation unit is configured to calculate, as the movement cost for each driving route candidate, a scheduled driving distance or a scheduled driving time during the vehicle travels along the driving route candidate, based on the driving route candidate.

7. The information processing device according to any one of claims 1 to 5, wherein
the calculation unit is configured to calculate, as the movement cost for each driving route candidate, a value obtained by summing a scheduled driving distance or a scheduled driving time of the vehicle over entire vehicles, which are calculated based on the driving route candidate.

8. The information processing device according to any one of claims 1 to 7, wherein
the calculation unit is configured to
extract one or more of the vehicles located within a predetermined range from the start point candidate,
calculate the driving route candidate along which the extracted vehicle travels, and
the extraction unit is configured to
extract the driving route from the driving route candidate for any of the extracted vehicles.

9. The information processing device according to any one of claims 1 to 8, wherein
the transportation request includes a desired end timing at which a user desires to end transportation of the object to be transported,
the extraction unit is configured to extract the driving route from the driving route candidate for which a difference between a scheduled timing when the vehicle arrives at the end point candidate and the desired end timing is equal to or less than a predetermined threshold.

10. The information processing device according to any one of claims 1 to 9, wherein
the transportation request includes a desired start timing at which a user desires to start transportation of the object to be transported,
the extraction unit is configured to extract the driving route from the driving route candidate for which a difference between a scheduled timing when the vehicle arrives at the start point candidate and the desired start timing is equal to or less than a predetermined threshold.

11. The information processing device according to claim 9 or 10, wherein
the predetermined threshold when the object to be transported is the cargo is set larger than the predetermined threshold when the object to be transported is the passenger.

12. The information processing device according to any one of claims 1 to 11, wherein
the type data includes at least one of
information identifying an information terminal that sent the transportation request,
information identifying an application that generated the transportation request, and
information identifying a user operation related to the transportation request.

13. The information processing device according to any one of claims 1 to 12, further comprising
a storage unit that associates and stores the vehicle and the extracted driving route, wherein
the extraction unit is configured to update the driving route stored in the storage unit each time the driving route is extracted.

14. The information processing device according to any one of claims 1 to 13, wherein after the determination unit determines that the object to be transported is the passenger,
the point identification unit identifies the start point candidate and the end point candidate based on the transportation request,
the calculation unit calculates the driving route candidate passing through the end point candidate after passing through the start point candidate, and
the extraction unit
extracts the driving route candidate in which a maximum number of passengers of the vehicle when the vehicle travels on the driving route candidate is equal to or less than a predetermined number of passengers, based on the transportation request, and
extracts the driving route from the extracted driving route candidate based on the travel time.

15. The information processing device according to any one of claims 1 to 13, wherein
after the determination unit determines that the object to be transported is the cargo,
the point identification unit identifies the start point candidate and the end point candidate based on the transportation request,
the calculation unit calculates the driving route candidate passing through the end point candidate after passing through the start point candidate, and
the extraction unit
extracts the driving route candidate in which a maximum load of the vehicle when the vehicle travels on the driving route candidate is equal to or less than a predetermined amount, based on the transportation request, and
extracts the driving route from the extracted driving route candidate based on the movement cost.

16. The information processing device according to any one of claims 1 to 13, wherein
after the calculation unit calculates the driving route candidate,
the determination unit determines whether the object to be transported is the passenger or the cargo,
in a case that the determination unit determines that the object to be transported is the passenger, the extraction unit
extracts the driving route candidate in which a maximum number of passengers of the vehicle when the vehicle travels on the driving route candidate is equal to or less than a predetermined number of passengers, based on the transportation request, and
extracts the driving route from the extracted driving route candidate based on the travel time,
in a case that the determination unit determines that the object to be transported is the cargo, the extraction unit
extracts the driving route candidate in which a maximum load of the vehicle when the vehicle travels on the driving route candidate is equal to or less than a predetermined amount, based on the transportation request, and
extracts the driving route from the extracted driving route candidate based on the movement cost.

17. An information processing system comprising an information terminal operated by a user, a server, and a vehicle, wherein
the information terminal is configured to send a transportation request requesting transportation of an object to be transported, including type data indicating whether the object to be transported is a passenger or a cargo,
the server includes
an acquisition unit configured to acquire the transportation request from the information terminal,
a determination unit configured to determine whether the object to be transported is the passenger or the cargo based on the type data,
a point identification unit configured to identify, based on the transportation request, a start point candidate for starting transportation of the object to be transported and an end point candidate for ending transportation of the object to be transported,
a calculation unit configured to calculate a driving route candidate that passes through the end point candidate after passing through the start point candidate, on which the vehicle that transports the object to be transported is scheduled to travel,
an extraction unit configured to extract a driving route from among the driving route candidate
based on a travel time until end of transportation of the passenger who is the object to be transported in a case of determining that the object to be transported is the passenger, and
based on a movement cost of the vehicle in a case of determining that the object to be transported is the cargo,
an output unit configured to output the extracted driving route.

18. An information processing method comprising
acquiring a transportation request requesting transportation of an object to be transported, including type data indicating whether the object to be transported is a passenger or a cargo,
determining whether the object to be transported is the passenger or the cargo based on the type data,
identifying, based on the transportation request, a start point candidate for starting transportation of the object to be transported and an end point candidate for ending transportation of the object to be transported,
calculating a driving route candidate that passes through the end point candidate after passing through the start point candidate, on which a vehicle that transports the object to be transported is scheduled to travel,
extracting a driving route from among the driving route candidate
based on a travel time until end of transportation of the passenger who is the object to be transported in a case of determining that the object to be transported is the passenger, and
based on a movement cost of the vehicle in a case of determining that the object to be transported is the cargo,
outputting the extracted driving route.
